# EUROPÄISCHE PATENTSCHRIFT

(11) **EP 3 002 103 B1**
(45) Veröffentlichungstag und Bekanntmachung des Hinweises auf die Patenterteilung: **06.03.2019**
(21) Anmeldenummer: 15185694.5
(22) Anmeldetag: 17.09.2015
(51) Int. Cl.: B29C 65/06, B29C 65/14, B29C 65/72, B29C 65/78

(54) **KUNSTSTOFFSCHWEISSVORRICHTUNG SOWIE KUNSTSTOFFSCHWEISSVERFAHREN HIERFÜR**
PLASTIC WELDING DEVICE AND PLASTIC WELDING METHOD FOR SAME
DISPOSITIF DE SOUDAGE DE MATIÈRE SYNTHÉTIQUE ET PROCÉDÉ DE SOUDAGE DE MATIÈRE SYNTHÉTIQUE ASSOCIÉ

(30) Priorität: 02.10.2014 DE 102014220109; 04.10.2014 DE 102014014367
(43) Veröffentlichungstag der Anmeldung: 06.04.2016
(73) Patentinhaber: Branson Ultraschall Niederlassung der Emerson Technologies GmbH & Co. oHG, 63128 Dietzenbach (DE)
(72) Erfinder: Wacker, Franz, 63906 Erlenbach/Main (DE); Fuchs, Silvio, 63594 Hasselroth-Neuenhasslau (DE)
(74) Vertreter: HWP Intellectual Property

(56) Entgegenhaltungen:
- EP-A1- 0 296 283
- US-A1- 2002 185 208
- US-B1- 6 294 114

## Beschreibung

Die vorliegende Erfindung betrifft eine Kunststoffschweißvorrichtung zum automatischen Verschweißen von mindestens drei Bauteilen sowie ein Kunststoffschweißverfahren für mindestens drei Bauteile.

Kunststoffschweißvorrichtungen umfassen üblicherweise ein Gehäuse mit einem darin angeordneten Unterwerkzeug sowie einem darin angeordneten Oberwerkzeug. Das Unterwerkzeug ist an einem Hubtisch befestigt, wohingegen das Oberwerkzeug starr an einer Oberwerkzeugplatte befestigt ist. Mittels des Hubtischs kann das Unterwerkzeug in Richtung des Oberwerkzeugs verfahren werden, um ein erstes Bauteil im Unterwerkzeug mit einem zweiten Bauteil im Oberwerkzeug zu verschweißen, beispielsweise mittels Reibschweißen.

Derartige Kunststoffschweißvorrichtungen werden zum Beispiel in der Automobilindustrie oder in der Medizintechnik eingesetzt. In der Automobilindustrie werden solche Kunststoffschweißvorrichtungen zur Herstellung von Leuchten genutzt, können aber auch bei der Herstellung anderer Bauteile oder Bauteilgruppen verwendet werden, die aus Kunststoffen bestehen oder Kunststoffe enthalten. In ähnlicher Weise kann die Kunststoffschweißvorrichtung bei der Herstellung von Geräten und/oder Bauteilgruppen in der Medizintechnik oder bei der Herstellung von Gebrauchsgütern Verwendung finden.

Der Arbeitsablauf mit der bekannten Kunststoffschweißvorrichtung ist wie folgt. Ein Bediener legt zunächst ein erstes Bauteil in die Aufnahme des Unterwerkzeugs ein. Anschließend positioniert er ein zweites Bauteil auf dem ersten Bauteil im Unterwerkzeug. Danach startet der Bediener den Schweißprozess, wobei sich zunächst eine Gehäuseöffnung schließt, damit ein Eingreifen in die Kunststoffschweißvorrichtung zum Schutz des Bedieners nicht mehr möglich ist. Nach dem Schließen des Gehäuses fährt der Hubtisch mit dem Unterwerkzeug und den darauf angeordneten Bauteilen aus einer Anfangsposition in Richtung des Oberwerkzeugs, bis das zweite Bauteil im Oberwerkzeug anliegt und sich der Hubtisch und die beiden Bauteile in einer Schweißposition befinden. Nun erfolgt ein Verschweißen des ersten Bauteils mit dem zweiten Bauteil mittels Reibschweißen. Nach Beendigung des Reibschweißens fährt der Hubtisch mit dem Unterwerkzeug und dem darin angeordnetem Verbund aus erstem und zweitem Bauteil von der Schweißposition zurück in die Anfangsposition. Nun wird die Gehäuseöffnung wieder geöffnet und der Bediener kann den Verbund aus erstem und zweitem Bauteil entnehmen.

Sollte der Bediener ein weiteres, drittes Bauteil mit dem Verbund aus erstem und zweitem Bauteil verschweißen wollen, dann legt er das dritte Bauteil auf den Verbund aus erstem und zweitem Bauteil im Unterwerkzeug und startet den Ablauf von vorne.

Diese bekannte Kunststoffschweißvorrichtung sowie das entsprechend beschriebene Schweißverfahren sind nachteilig, da das Öffnen der Gehäuseöffnung, das Beladen mit dem dritten Bauteil und das erneute Starten des Verfahrens zeitaufwendig sind.

Ein Verfahren und eine Vorrichtung zum Verschweißen von Elementen aus Harz sind in EP 0 296 283 A1 beschrieben. Hierbei werden zwei Bauelemente zunächst miteinander und dann mit einem weiteren Bauteil verschweißt, um einen Stoßfänger herzustellen.

Ein weiteres Verfahren und eine Vorrichtung zum Durchführen mehrerer Schweißvorgänge innerhalb einer Schweißbefestigungsanordnung sind in US 2002/0185208 A1 beschrieben. Die Schweißanordnung weist feststehende obere und untere Werkzeuge auf, die erste und zweite Bauteilstücke unterstützen. Ein mittleres Werkzeug, das im Hinblick auf das obere und das untere Werkzeug bewegbar ist, bewegt ein drittes Bauteilstück in Eingriff mit einem dem ersten oder dem zweiten Bauteilstück für einen ersten Vibrationsschweißvorgang. Das mittlere Werkzeug bewegt anschließend das dritte Bauteilstück in Eingriff mit dem verbleibenden Bauteilstück für einen zweiten Vibrationsschweißvorgang.

Die US 6,294,114 B1 beschreibt eine Dreilagen-Thermoform-Vorrichtung, ein Verfahren hierzu sowie die damit hergestellten Gegenstände. Auch hier wird zunächst ein Verbund aus zwei Bauteilen hergestellt, bevor das dritte Bauteil mit dem Verbund aus zwei Bauteilen verschweißt wird.

Die Aufgabe der vorliegenden Erfindung ist daher, eine Kunststoffschweißvorrichtung bereitzustellen, die ein automatisches Verschweißen von mindestens drei Teilen ermöglicht. Weiterhin soll ein entsprechendes Kunststoffschweißverfahren bereitgestellt werden.

Die obige Aufgabe wird gelöst durch eine Kunststoffschweißvorrichtung zum automatischen Verschweißen von mindestens drei Bauteilen gemäß dem unabhängigen Patentanspruch 1 sowie ein automatisches Kunststoffschweißverfahren für mindestens drei Bauteile gemäß dem unabhängigen Patentanspruch 14. Weitere vorteilhafte Ausgestaltungen ergeben sich aus der nachfolgenden Beschreibung, den Zeichnungen sowie den abhängigen Patentansprüchen.

Die erfindungsgemäße Kunststoffschweißvorrichtung zum automatischen Verschweißen von mindestens drei Bauteilen umfasst mindestens ein erstes Werkzeug, auf dem ein erstes Bauteil positionierbar ist, mindestens ein zweites Werkzeug, wobei das erste und das zweite Werkzeug relativ zueinander bewegbar sind, um das erste Bauteil mit einem zweiten Bauteil zu verschweißen, sowie mindestens eine Übergabevorrichtung, die relativ zu mindestens einem der Werkzeuge bewegbar ist und mit der automatisch mindestens ein zweites und/oder ein drittes Bauteil einem der Werkzeuge zuführbar ist, sodass das mindestens eine dritte Bauteil mit dem Verbund aus erstem und zweitem Bauteil über das erste und das
zweite Werkzeug oder über das erste oder das zweite Werkzeug in Kombination mit einem dritten Werkzeug verschweißbar ist.

Vorzugsweise handelt es sich bei der Kunststoffschweißvorrichtung um eine Kunststoff-Reibschweißvorrichtung, eine Kunststoff-Infrarot-Schweißvorrichtung oder eine Kombination davon. Beispielhaft wird die Kunststoffschweißvorrichtung zunächst als Kunststoff-Reibschweißvorrichtung beschrieben.

Hierbei ist das erste Werkzeug vorzugsweise an einem ersten Träger angeordnet, insbesondere an einem Hubtisch. Das zweite Werkzeug ist vorzugsweise an einem zweiten Träger angeordnet, insbesondere an einer oberen Befestigungsplatte. Vorzugsweise sind der erste und zweite Träger relativ zueinander bewegbar. Auf dieser konstruktiven Grundlage sind auch das erste und zweite Werkzeug derart relativ zueinander bewegbar, dass mindestens zwei Bauteile miteinander verbindbar sind. So ist es beispielsweise bevorzugt, dass der erste Träger starr angeordnet ist, während die Werkzeuge und Bauteile relativ zueinander über die Bewegung des Hubtisches bewegt werden. Dieser Aufbau wurde im einleitenden Teil bereits kurz erläutert.

Darüber hinaus, und anders als bei einer bekannten Kunststoffschweißvorrichtung, umfasst die erfindungsgemäße Kunststoffschweißvorrichtung die mindestens eine Übergabevorrichtung, mit der das dritte Bauteil einem der Werkzeuge automatisch zuführbar ist, wie nachstehend erläutert. Das dritte Bauteil wird hierzu erfindungsgemäß bereits zu Beginn in der Kunststoffschweißvorrichtung gelagert bzw. angeordnet. Zur besseren Verständlichkeit wird nun die erfindungsgemäße Kunststoffschweißvorrichtung im Betrieb als Kunststoff-Reibschweißvorrichtung beschrieben.

Wie bei einer herkömmlichen Kunststoffschweißvorrichtung ordnet ein Bediener das erste Bauteil im ersten Werkzeug an. Das zweite Bauteil wird vom Bediener auf dem ersten Bauteil angeordnet. Alternativ kann der Bediener das zweite Bauteil auch direkt im zweiten Werkzeug anordnen. Das dritte Bauteil wird in einer Lagerposition in der Kunststoffschweißvorrichtung vom Bediener angeordnet. Nachdem alle Bauteile an ihrer Position in der Kunststoffschweißvorrichtung angeordnet worden sind, startet der Bediener die Kunststoffschweißvorrichtung. Alternativ zum Bediener sind alle oder einzelne dieser anfänglichen Beladeschritte von einem Roboter, einer Beladeeinheit oder einer Belade- und Entnahmeeinheit durchführbar. Diese und die nachfolgenden Schritte des Schweißverfahrens werden vorzugsweise durch eine Steuervorrichtung der Kunststoffschweißvorrichtung vorgegeben.

Nun fährt in einem ersten Schritt der Hubtisch mit dem ersten Werkzeug von einer Anfangsposition in Richtung des zweiten Werkzeugs bis in eine erste Schweißposition. Optional erfolgt vor dem vollständigen Verfahren in die erste Schweißposition ein automatisches Zentrieren des ersten und des zweiten Bauteils zueinander sowie zum jeweiligen Werkzeug. In der Schweißposition erfolgt ein Verschweißen des ersten und des zweiten Bauteils miteinander mittels Reibschweißen.

Wenn der Reibschweißvorgang abgeschlossen ist, dann fährt der Hubtisch aus der Schweißposition heraus in eine erste Zwischenposition, wodurch sich das erste und das zweite Werkzeug voneinander weg bewegen. Bei der Zwischenposition kann es sich um die Anfangsposition oder eine beliebige Position zwischen erster Schweißposition und Anfangsposition handeln. Für das nachfolgende Beispiel verbleibt der Verbund aus verschweißtem erstem und zweitem Bauteil im ersten Werkzeug. Alternativ ist der Verbund auch im zweiten Werkzeug weiter festhaltbar, beispielsweise mechanisch oder mittels Unterdruck.

Nun wird das dritte Bauteil aus der Lagerposition von der Übergabevorrichtung automatisch einem der Werkzeuge zugeführt. Bei der Übergabevorrichtung handelt es sich um jede Vorrichtung, mit der automatisch das dritte Bauteil von einer Lagerposition einem der Werkzeuge zuführbar ist. Beispielsweise handelt es sich um verfahrbare Hebel- und Schwenkmechanismen, verfahrbare Werkzeuge, einen Roboterarm oder vorzugsweise um die nachfolgend in der detaillierten Beschreibung erläuterte Vorrichtung. In einer weiteren Ausführungsform ist die Übergabevorrichtung ebenfalls als weiteres Werkzeug ausgebildet.

Die Zufuhr des dritten Bauteils zum ersten oder zweiten Werkzeug setzt voraus, dass das dritte Bauteil eine Form bzw. Außenkontur aufweist, die der Form des ersten oder des zweiten Bauteils gleicht. Im vorliegenden Beispiel wird das dritte Bauteil dem zweiten Werkzeug zugeführt, weist also eine Form auf, die passend oder identisch zur Form des zweiten Bauteils gestaltet ist. Alternativ ist das dritte Bauteil jedoch auch auf dem Verbund aus erstem und zweitem Bauteil im ersten Werkzeug ablegbar. Sollte das dritte Bauteil eine Form aufweisen, die identisch mit dem ersten Bauteil ist, dann verbleibt der Verbund aus erstem und zweitem Bauteil nach dem Verschweißen im zweiten Werkzeug, so dass das dritte Bauteil im ersten Werkzeug automatisch durch die Übergabevorrichtung positionierbar ist.

Nachdem das dritte Bauteil in einem der Werkzeuge angeordnet worden ist, fährt der Hubtisch von der ersten Zwischenposition in eine zweite Schweißposition, also in Richtung des zweiten Werkzeugs. Auch hier kann vor Erreichen der zweiten Schweißposition wieder ein optionaler Zentrier- und/oder Positionierschritt durchgeführt werden, wie er oben für das ersten und das zweite Bauteil beschrieben wurde. Mittels dieses zweiten Zentrierschrittes wird das dritte Bauteil mit dem Verbund aus erstem und zweitem Bauteil ausgerichtet. Ebenso werden das dritte Bauteil mit dem zweiten Werkzeug und der Verbund aus erstem und zweitem Bauteil mit dem ersten Werkzeug ausgerichtet. Dann erfolgt das Verschweißen des dritten Bauteils mit dem Verbund aus erstem und zweitem Bauteil mittels Reibschweißen.

Nach Beendigung des Reibschweißvorgangs fährt der Hubtisch aus der zweiten Schweißposition heraus und bevorzugt zurück in die Anfangsposition. Der Verbund aus erstem, zweitem und drittem Bauteil ist hierbei wahlweise im ersten oder im zweiten Werkzeug angeordnet und wird entsprechend vom Bediener entnommen. Alternativ ist der Verbund von einem Roboter, einer Entnahmeeinheit oder einer Belade- und Entnahmeeinheit automatisch entnehmbar.

Ein Vorteil der erfindungsgemäßen Kunststoffschweißvorrichtung ist, dass die Taktzeit im Vergleich zu einer herkömmlichen Kunststoffschweißvorrichtung reduziert ist, da die Zeit zum Beladen der Kunststoffschweißvorrichtung mit dem dritten Bauteil nicht benötigt wird. Dies führt zu einer höheren Effizienz und somit zu einer Kostenreduktion im Vergleich zu herkömmlichen Kunststoffschweißvorrichtungen.

Die Taktzeit ist weiter reduzierbar, wenn der fertige Verbund aus erstem, zweitem und drittem Bauteil im zweiten Werkzeug angeordnet ist, da dann direkt ein Beladen mit dem ersten, dem zweiten und dem dritten Bauteil erfolgen kann, ohne dass zuerst der fertige Verbund entnommen werden muss.

Häufig tritt in der Praxis der Fall auf, dass das dritte Bauteil eine Form bzw. Außenkontur aufweist, die von der des ersten und der des zweiten Bauteils verschieden ist. In diesem Fall weist die Kunststoffschweißvorrichtung vorzugsweise ein drittes Werkzeug für das dritte Bauteil auf. Das dritte Werkzeug ist in Abhängigkeit vom Verfahrensablauf benachbart zum ersten oder zweiten Werkzeug angeordnet. Vorzugsweise, und wie nachfolgend beschrieben, ist das dritte Werkzeug am zweiten Träger benachbart dem zweiten Werkzeug angeordnet, also vorzugsweise an der oberen Befestigungsplatte.

Der Ablauf des Verfahrens ist bis zum Übergeben des dritten Bauteils identisch mit den oben beschriebenen Verfahrensschritten. Anstelle des automatischen Übergebens des dritten Bauteils an das erste oder das zweite Werkzeug erfolgt das automatische Übergeben des dritten Bauteils nun allerdings an das dritte Werkzeug. Weiterhin muss, da das erste Werkzeug in einer ersten Position mit dem zweiten Werkzeug zum Herstellen des Verbunds aus erstem und zweitem Bauteil ausgerichtet ist, das erste Werkzeug nun in eine zweite Position verfahren werden, in der es mit dem dritten Werkzeug ausgerichtet ist. Vorzugsweise ist das erste Werkzeug daher auf dem Hubtisch bewegbar zwischen einer ersten Position, in der es mit dem zweiten Werkzeug ausgerichtet ist, und einer zweiten Position, in der es mit dem dritten Werkzeug ausgerichtet ist. Sollte das dritte Werkzeug woanders angeordnet sein, dann muss sich die beispielhaft beschriebene Anordnung entsprechend ändern. In jedem Fall muss das Werkzeug, das den Verbund aus erstem und zweitem Bauteil trägt oder hält, mit dem Werkzeug ausrichtbar sein, das während des Verfahrensablaufs das dritte Bauteil aufweist oder hält.

Nachdem die Ausrichtung der zum Verschweißen des dritten Bauteils mit dem Verbund erforderlichen Werkzeuge hergestellt wurde, läuft das weitere Verfahren analog zum oben beschriebenen Verfahren ab. Es erfolgt also ein Verfahren des Hubtischs aus der ersten Zwischenposition in Richtung des dritten Werkzeugs in eine zweite Schweißposition. Auch hier ist vor Erreichen der endgültigen Schweißposition ein optionaler Zentrier- oder Positionierschritt durchführbar. Dann erfolgt das Verschweißen des dritten Bauteils mit dem Verbund aus erstem und zweitem Bauteil mittels Reibschweißen. Danach fährt der Hubtisch aus der zweiten Schweißposition heraus und beispielsweise zurück in die Anfangsposition. Der Verbund aus erstem, zweitem und drittem Bauteil ist hierbei wahlweise im ersten oder im dritten Werkzeug angeordnet und wird entsprechend vom Bediener entnommen. Alternativ ist der Verbund von einem Roboter, einer Entnahmeeinheit oder einer Belade- und Entnahmeeinheit automatisch entnehmbar.

Ein Vorteil dieser Ausführungsform ist, dass mindestens drei Bauteile unterschiedlicher Form automatisch miteinander verschweißbar sind. Im Vergleich zu einer herkömmlichen Kunststoffschweißvorrichtung stellt dies den oben bereits diskutierten Taktzeitvorteil bereit.

In einer weiteren bevorzugten Ausführungsform ist die Übergabevorrichtung am ersten Träger angeordnet, also insbesondere am Hubtisch, und zwischen einer Lagerposition und einer Übergabeposition bewegbar. Dies stellt zum einen den Vorteil bereit, dass die Übergabevorrichtung mittels des Hubtischs zum zweiten und/oder dritten Werkzeug bewegbar ist. Ein weiterer Vorteil ist, dass die Übergabevorrichtung selbst die Lagerposition für das dritte Bauteil zu Beginn bereitstellt. Somit ist eine weitere Vereinfachung des Verfahrens gegeben, da das dritte Bauteil nicht erst von der Übergabevorrichtung von einer gesonderten Lagerposition innerhalb der Kunststoffschweißvorrichtung aufgenommen werden muss.

Erfindungsgemäß weist die Kunststoffschweißvorrichtung eine Vorwärmanordnung mit einer ersten Vorwärmvorrichtung auf. Die erste Vorwärmvorrichtung ist vorzugsweise eine Infrarot-Vorwärmvorrichtung. Die Vorwärmanordnung selbst ist zwischen einer Ruheposition und einer Vorwärmposition bewegbar. In der Vorwärmposition ist die Vorwärmvorrichtung mit einem der Werkzeuge ausgerichtet, so dass ein Bauteil in dem entsprechenden Werkzeug zumindest teilweise im zu verschweißenden Bereich erwärmbar ist. Das Vorwärmen des entsprechenden Bauteils findet vor einem Verschweißen mit dem weiteren Bauteil oder dem Verbund statt. Beispielsweise erfolgt das Vorwärmen vor dem Verschweißen des ersten Bauteils mit dem zweiten Bauteil. Alternativ oder zusätzlich erfolgt das Vorwärmen ebenso vor dem Verschweißen des dritten Bauteils mit dem Verbund aus erstem und zweitem Bauteil.

Bezugnehmend auf den oben beschriebenen Verfahrensablauf enthält dieser nun weitere Verfahrensschritte nachdem der Hubtisch die erste und/oder die zweiten Zwischenposition erreicht hat. Nämlich das Verfahren der Vorwärmanordnung von einer Ruheposition in eine Vorwärmposition, so dass die mindestens eine Vorwärmvorrichtung mit einem der Werkzeuge ausgerichtet ist. Danach wird die Vorwärmvorrichtung in Anlage mit dem zu erwärmenden Werkzeug gebracht und es erfolgt ein zumindest teilweises Erwärmen der Oberfläche des Bauteils im Werkzeug im zu verschweißenden Bereich. Anschließend wird die erste Vorwärmvorrichtung wieder aus dem Eingriff mit dem Bauteil gebracht und die Vorwärmanordnung wird von der Vorwärmposition in die Ruheposition zurück gefahren.

Ein Vorteil des Vorwärmens ist, dass eine optisch anspruchsvollere Schweißnaht erzielbar ist, die insbesondere im Bereich der Automobilindustrie beispielsweise bei Leuchten-Anwendungen gewünscht ist. Die optisch anspruchsvollere Schweißnaht bzw. kosmetische Schweißnaht ist insbesondere die Folge einer verminderten oder ganz unterbundenen Fusselbildung während eines Reibschweißens der vorgewärmten Bauteile. Ein zusätzlicher Vorteil der Vorwärmung ist insbesondere die erhöhte Festigkeit der späteren Schweißverbindung bei ausgewählten Kunststoffen.

Alternativ zur oben beschriebenen Kombination aus Vorwärmen und Reibschweißen ist auch ein Verschweißen der Bauteile alleine aufgrund der Vorwärmanordnung realisierbar. In dieser bevorzugten Ausführungsform umfasst die Vorwärmanordnung eine zweite Vorwärmvorrichtung, die insbesondere passend oder komplementär zur ersten Vorwärmvorrichtung ausgebildet ist und die auf einer der ersten Vorwärmvorrichtung gegenüber liegenden Oberfläche eines Trägers der Vorwärmanordnung angeordnet ist.

Die Vorwärmanordnung ist in einer Ausführungsform frei im Raum bewegbar. Dies gilt ebenso für die weiteren Komponenten, wie Werkzeuge und Übergabevorrichtung. Diese unabhängige Bewegung im Raum wird nachfolgend am Beispiel der Vorwärmanordnung kurz erläutert. Hierbei ist die Vorwärmanordnung entlang zweier separater Achsen bewegbar. Auf diese Weise ist die Vorwärmanordnung beispielsweise neben dem Hubtisch entlang der ersten Achse in vertikaler Richtung verfahrbar und entlang der zweiten Achse in horizontaler Richtung zwischen Hubtisch und oberer Befestigungsplatte verfahrbar. Alternativ ist die Vorwärmanordnung konstruktiv mit dem Hubtisch verbunden, so dass eine vertikale Bewegung zusammen mit dem Hubtisch realisierbar ist. Diese Beispiele gelten analog für die jeweiligen Werkzeuge sowie die Übergabevorrichtung.

Bezugnehmend auf das einführende Beispiel wird die Funktionsweise einer solchen reinen Kunststoff-Infrarot-Schweißvorrichtung kurz erläutert. Hierbei wird davon ausgegangen, dass das zweite Bauteil bereits im zweiten Werkzeug angeordnet ist und sich der Hubtisch entweder in der Anfangsposition oder in einer zweiten Zwischenposition befindet. Sowohl die Anfangsposition als auch die zweite Zwischenposition stellt einen Abstand zwischen erstem und zweitem Werkzeug bereit, der ausreicht, damit die Vorwärmanordnung aus der Ruheposition in die Vorwärmposition zwischen die beiden Werkzeuge verfahrbar ist. Sobald die Vorwärmanordnung die Vorwärmposition erreicht hat, wird die Vorwärmanordnung zusammen mit dem Hubtisch in Richtung des zweiten Werkzeugs verfahren, bis die erste Vorwärmvorrichtung beispielsweise benachbart dem ersten Bauteil im ersten Werkzeug und die zweite Vorwärmvorrichtung beispielsweise benachbart dem zweiten Bauteil im zweiten Werkzeug angeordnet ist. Diese Position des Hubtischs wird auch als Vorwärmposition des Hubtischs bezeichnet.

Nun werden die Oberflächen der beiden Bauteile vorgewärmt. Nach dem Vorwärmen fährt der Hubtisch zurück in die zweite Zwischenposition. Sobald der Hubtisch die zweite Zwischenposition erreicht hat wird die Vorwärmanordnung zurück in die Ruheposition verfahren. Anschließend fährt der Hubtisch in die erste Schweißposition, um das erste Bauteil mit dem zweiten Bauteil durch Druck und ohne Reibschweißen in den vorerwärmten Bereichen miteinander zu verbinden. Zum Verschweißen des dritten Bauteils mit dem Verbund aus erstem und zweitem Bauteil laufen die oben beschriebenen Schritte analog ab. Sollte ein drittes Werkzeug vorhanden sein, dann sind die entsprechenden Vorwärmvorrichtungen entweder bewegbar am Träger angeordnet oder es ist eine entsprechende Anzahl an Vorwärmvorrichtungen vorhanden.

Ein Vorteil des reinen Infrarotschweißens ist die partikelfreie Schweißverbindung, die insbesondere im Bereich der Medizintechnik erforderlich ist.

In einer weiteren Ausführungsform sind das Reibschweißen und das Infrarotschweißen kombiniert. Hierzu findet das Verschweißen nicht ausschließlich unter Druck, sondern unter Anwendung des Eingangs beschriebenen Reibschweißens statt. Theoretisch ist eine Vielzahl von Kombinationsmöglichkeiten aufgrund des oben beschriebenen Verfahrens möglich, von denen die wichtigsten nachfolgend kurz aufgeführt sind: a) reines Reibschweißen aller drei Bauteile, b) reines Infrarotschweißen aller drei Bauteile, c) Reibschweißen des ersten und des zweiten Bauteils mit und ohne Vorwärmen, d) Reibschweißen des dritten Bauteils und des Verbunds mit und ohne Vorwärmen, e) reines Infrarotschweißen des ersten und des zweiten Bauteils, f) reines Infrarotschweißen des dritten Bauteils und des Verbunds.

In einer ebenfalls bevorzugten Ausführungsform umfasst die Kunststoffschweißvorrichtung mindestens zwei erste und zweite Werkzeuge. Dies ist insbesondere bei der Herstellung von Leuchten im Automobilbereich relevant, da auf diese Weise immer eine rechte und eine linke Leuchte eines Fahrzeugs gleichzeitig herstellbar sind. Abhängig von dem zur Verfügung stehenden Platz kann die Vorrichtung auch weitere erste und zweite Werkzeuge aufweisen. Das gleiche gilt für gegebenenfalls weitere erforderliche Werkzeuge aufgrund des dritten Bauteils oder weiterer Bauteile sowie die entsprechenden Vorwärmvorrichtungen der Vorwärmanordnung.

Vorteilhafterweise verfügt die Kunststoffschweißvorrichtung über ein Gehäuse mit einem Eingriffschutz. Bei dem Eingriffschutz kann es sich um einen mechanischen Eingriffschutz, wie beispielsweise eine mittels einer Türe schließbare Gehäuseöffnung handeln. Alternativ ist eine Lichtschranke vorgesehen, die das Schweißverfahren bei Unterbrechung anhält. Innerhalb des Gehäuses sind das erste und das zweite Werkzeug sowie die Lagerposition des dritten Bauteils und die Übergabevorrichtung angeordnet. Falls erforderlich oder vorhanden ist ebenfalls das dritte Werkzeug und/oder die Vorwärmanordnung innerhalb des Gehäuses angeordnet. Im Einsatz der Kunststoffschweißvorrichtung werden dann die weiteren Schritte ausgeführt: Bereitstellen des Eingriffschutzes, also beispielsweise Schließen einer Gehäuseöffnung oder Anschalten der Lichtschranke der Kunststoffschweißvorrichtung, nach dem Beladen und Entfernen des Eingriffschutzes, also beispielsweise Öffnen der Gehäuseöffnung oder Abschalten der Lichtschranke der Kunststoffschweißvorrichtung, nach dem Verschweißen des dritten Bauteils mit dem Verbund aus erstem und zweitem Bauteil. Ein Vorteil des Eingriffschutzes ist, dass der Bediener vor dem Hineingreifen in die Kunststoffschweißvorrichtung während des Betriebs der Kunststoffschweißvorrichtung geschützt ist.

Ein erfindungsgemäßes automatisches Kunststoffschweißverfahren für mindestens drei Bauteile in Verbindung mit einer, insbesondere erfindungsgemäßen, Schweißvorrichtung, umfasst die Schritte: Anordnen eines ersten Bauteils an einem ersten Werkzeug, eines zweiten Bauteils auf dem ersten Bauteil oder an einem zweiten Werkzeug und eines dritten Bauteils an einer Lagerposition der Schweißvorrichtung, danach Verfahren des ersten Werkzeugs und des zweiten Werkzeugs relativ zueinander mit dazwischen angeordnetem erstem und zweitem Bauteil aus einer Anfangsposition in eine erste Schweißposition, und Verschweißen des ersten und des zweiten Bauteils miteinander, anschließend Verfahren des ersten und des zweiten Werkzeugs relativ zueinander mit dem dazwischen angeordneten Verbund aus verschweißtem erstem und zweitem Bauteil aus der ersten Schweißposition in eine erste Zwischenposition, automatisches Übergeben des dritten Bauteils von der Lagerposition mittels einer Übergabevorrichtung an eines der Werkzeuge, Verfahren des ersten und des zweiten Werkzeugs oder des ersten oder des zweiten Werkzeugs in Kombination mit einem dritten Werkzeug relativ zueinander von der Übergabeposition in eine zweite Schweißposition, danach Verschweißen des dritten Bauteils mit dem Verbund aus verschweißtem erstem und zweitem Bauteil über das erste und das zweite Werkzeug oder über das erste oder das zweite Werkzeug in Kombination mit dem dritten Werkzeug und Verfahren des ersten und des zweiten Werkzeugs oder des ersten oder des zweiten Werkzeugs in Kombination mit dem dritten Werkzeug relativ zueinander aus der zweiten Schweißposition.

Das erfindungsgemäße Schweißverfahren wurde bereits oben beim Betrieb der erfindungsgemäßen Kunststoffschweißvorrichtung erläutert. Daher wird im Hinblick auf den Ablauf und die sich ergebenen Vorteile auf die obigen Ausführungen verwiesen.

In einer vorteilhaften Ausführungsform ist das automatische Kunststoffschweißverfahren ein Kunststoff-Reibschweißverfahren, ein Kunststoff-Infrarot-Schweißverfahren oder eine Kombination davon. Die entsprechenden Verfahrensabläufe wurden ebenfalls oben beschrieben, so dass auf diese verwiesen wird.

Wenn die Kunststoffschweißvorrichtung ein drittes Werkzeug benachbart dem zweiten Werkzeug aufweist und sich das erste Werkzeug zu Beginn in einer ersten Position in Ausrichtung mit dem zweiten Werkzeug befindet, weist das automatische Kunststoffschweißverfahren in einer weiteren vorteilhaften Ausführungsform den weiteren Schritt auf: Verfahren des ersten Werkzeugs in eine zweite Position in Ausrichtung mit dem dritten Werkzeug während oder nach dem Verfahren in die erste Zwischenposition und vor dem Verschweißen des dritten Bauteils mit dem Verbund aus erstem und zweitem Bauteil. Durch die Verwendung des dritten Werkzeugs ist ein drittes Bauteil mit dem Verbund verschweißbar, das eine Form aufweist, die nicht mit der Form des ersten oder des zweiten Bauteils identisch ist.

Die Kunststoffschweißvorrichtung umfasst eine Vorwärmanordnung mit mindestens einer Vorwärmvorrichtung und das Schweißverfahren umfasst erfindungsgemäß die weiteren Schritte: Verfahren der Vorwärmanordnung von einer Ruheposition in eine Vorwärmposition, so dass die mindestens eine Vorwärmvorrichtung mit einem der Werkzeuge ausgerichtet ist, und zumindest teilweises Erwärmen der Oberfläche eines Bauteils im Werkzeug im zu verschweißenden Bereich. Auch dieser Verfahrensablauf wurde bereits oben im Zusammenhang mit der erfindungsgemäßen Kunststoffschweißvorrichtung beschrieben.

Ebenfalls gemäß einer bevorzugten Ausführungsform umfasst das automatisches Kunststoffschweißverfahren die weiteren Schritte: Bereitstellen eines Eingriffschutzes nach dem Beladen und Entfernen des Eingriffschutzes frühestens nach dem letzten Verschweißen. Auf diese Weise wird der Bediener vor dem Hineingreifen in die Kunststoffschweißvorrichtung während des Schweißens und dem Verfahren der beweglichen Vorrichtungen geschützt. Im Fall des Verschweißens der drei oder von mehr als drei Bauteilen wird der Eingriffschutz also erst nach dem Verschweißen des letzten Bauteils mit dem Verbund und vorzugsweise nach Erreichen einer Anfangsposition der Kunststoffschweißvorrichtung entfernt.

Nachfolgend wird die vorliegende Erfindung beispielhaft anhand der Zeichnungen erläutert. Gleiche Bezugszeichen in den Zeichnungen bezeichnen gleiche Bauteile. Es zeigen:
- Figur 1: eine erste erfindungsgemäß bevorzugte Ausführungsform eines Hubtischs einer Kunststoffschweißvorrichtung,
- Figur 2: eine erfindungsgemäß bevorzugte Ausführungsform einer obere Befestigungsplatte einer Kunststoffschweißvorrichtung,
- Figur 3: eine erste erfindungsgemäß bevorzugte Ausführungsform einer Kunststoffschweißvorrichtung,
- Figur 4: eine zweite erfindungsgemäß bevorzugte Ausführungsform eines Hubtischs einer Kunststoffschweißvorrichtung,
- Figur 5: eine zweite erfindungsgemäß bevorzugte Ausführungsform einer Kunststoffschweißvorrichtung
- Figuren 6-16: die zweite erfindungsgemäß bevorzugte Ausführungsform der Kunststoffschweißvorrichtung aus Fig. 5 in unterschiedlichen Betriebszuständen und
- Figur 17: eine bevorzugte Ausführungsform des erfindungsgemäßen Schweißverfahrens.

Die erfindungsgemäße Kunststoffschweißvorrichtung wird beispielsweise im Automobilbereich oder in der Medizintechnik eingesetzt. Nachfolgend wird die Kunststoffschweißvorrichtung anhand des bevorzugten Einsatzes in der Leuchten-Herstellung beschrieben.

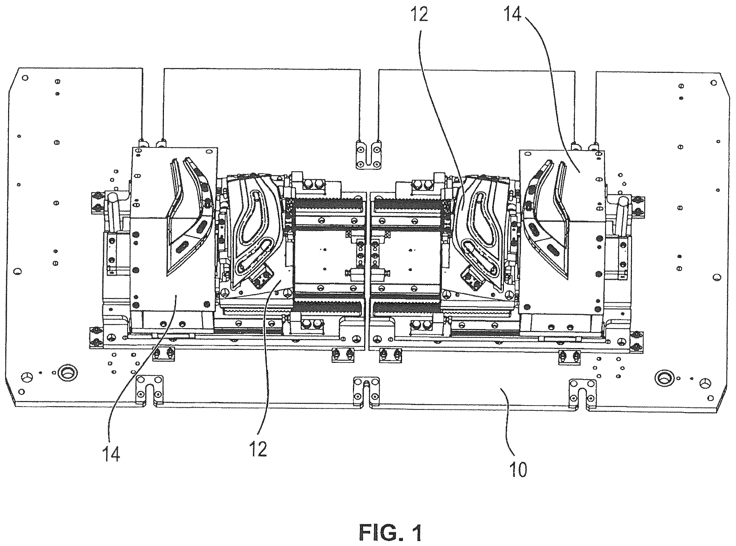

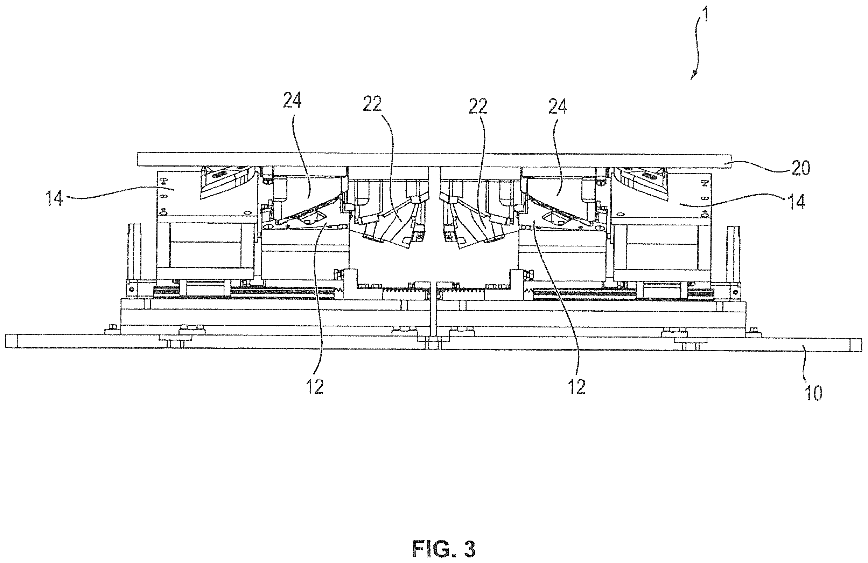

Bezugnehmend auf Fig. 3 ist eine erste Ausführungsform der erfindungsgemäßen Kunststoffschweißvorrichtung 1 dargestellt. Fig. 1 zeigt einen Hubtisch 10 aus Fig. 3. Auf dem Hubtisch 10 sind zwei erste Werkzeuge 12 sowie zwei Übergabevorrichtungen 14 angeordnet. Sowohl die ersten Werkzeuge 12 als auch die Übergabevorrichtungen 14 sind vorzugsweise bewegbar auf dem Hubtisch 10 angeordnet. In der Darstellung gemäß den Fig. 1 und 3 befinden sich die ersten Werkzeuge 12 in einer zweiten Position und die Übergabevorrichtungen 14 in einer Lagerposition.

Bei dem Aufbau auf dem Hubtisch 10 handelt es sich somit um einen gespiegelten Aufbau, so dass gleichzeitig zwei Sätze aus erstem, zweitem und drittem Bauteil verarbeitbar sind. Auf diese Weise sind beispielsweise eine rechte und eine linke Leuchte eines Kraftfahrzeugs gleichzeitig herstellbar. Je nach Größe der Kunststoffschweißvorrichtung 1 sind auch weitere erste Werkzeuge darin anordenbar zusammen mit dem dazugehörigen zweiten Werkzeug.

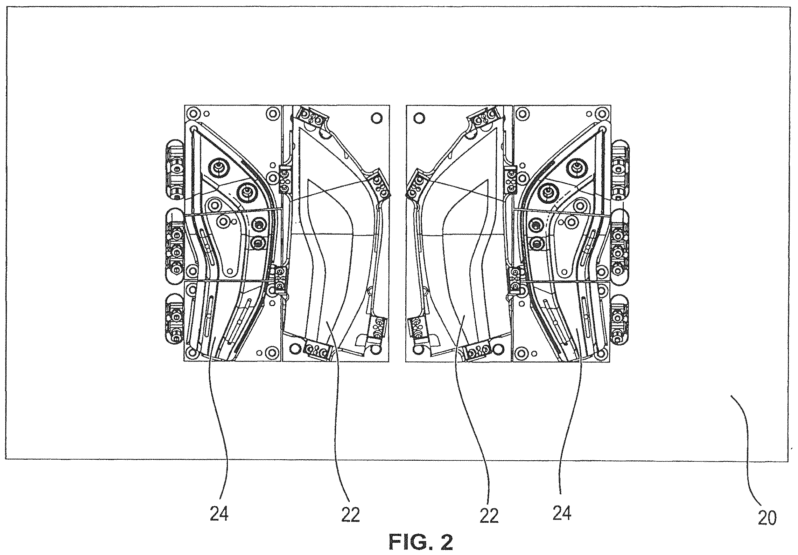

Fig. 2 zeigt die obere Befestigungsplatte 20 mit zwei darauf angeordneten zweiten Werkzeugen 22 und dritten Werkzeugen 24. Die zweiten Werkzeuge 22 und die dritten Werkzeuge 24 sind starr an der oberen Befestigungsplatte 20 angeordnet. Dies gilt insbesondere dann, wenn an der oberen Befestigungsplatte 20 ein Schwingkopf zum Reibschweißen realisiert ist. Es ist ebenfalls denkbar, die zweiten 22 und dritten Werkzeuge 24 an der oberen Befestigungsplatte 20 bewegbar zu befestigen und die ersten Werkzeug 12 sowie die Übergabevorrichtungen 14 am Hubtisch 10 starr anzuordnen. Auch Kombinationen hiervon sind möglich. In diesem Fall darf es sich aber nicht um einen Vibrationskopf zum Reibschweißen handeln, da hohe Beschleunigungskräfte im Vibrationskopf eine Beschädigung des Werkzeugs zur Folge haben würden.

Bezugnehmend auf Fig. 3 ist die Kunststoffschweißvorrichtung 1 in einer Schweißposition dargestellt. Hierbei befindet sich der Hubtisch 10 nahe der oberen Befestigungsplatte 20, sodass im dargestellten Beispiel die ersten Werkzeuge 12 mit den dritten Werkzeugen 24 in Eingriff stehen und dazwischenliegende Bauteile, beispielsweise mittels Reibschweißen, verbunden werden können. Würden sich die ersten Werkzeuge 12 nicht in der zweiten Position, wie dargestellt, sondern in der ersten Position befinden, dann wären die ersten Werkzeuge 12 mit den zweiten Werkzeugen 22 ausgerichtet.

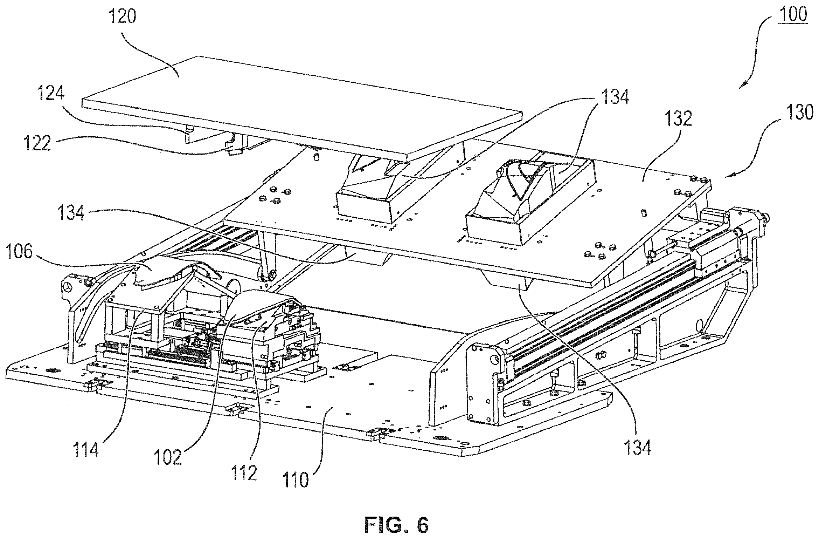

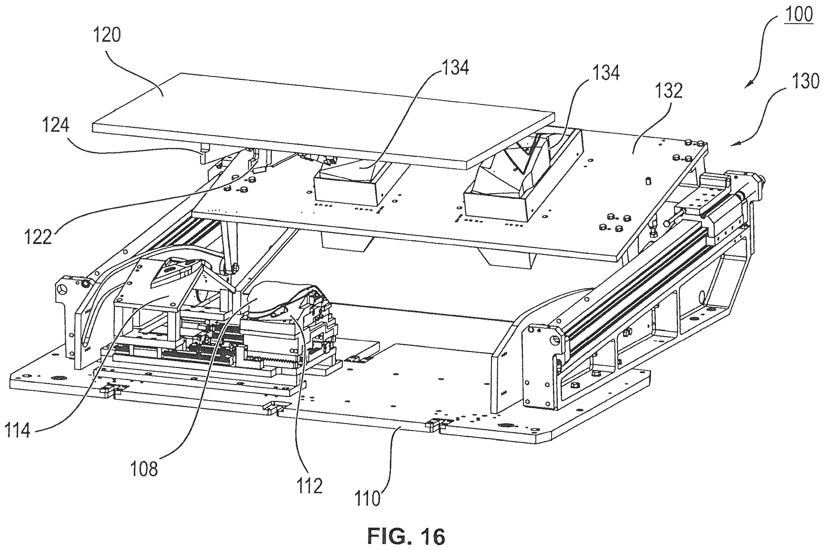

Die Funktionsweise der ersten Ausführungsform der Kunststoffschweißvorrichtung 1 wird nachfolgend und bezugnehmend auf die Figuren 6 bis 16 erläutert. Hierbei ist zu beachten, dass die erste Ausführungsform der Kunststoffschweißvorrichtung 1 im Vergleich zur zweiten Ausführungsform der Kunststoffschweißvorrichtung 100 keine Vorwärmanordnung 130 aufweist, sodass die entsprechenden Verfahrensschritte dann entfallen. Bei der gezeigten Kunststoffschweißvorrichtung 1 handelt es sich ausschließlich um eine Kunststoff-Reibschweißvorrichtung.

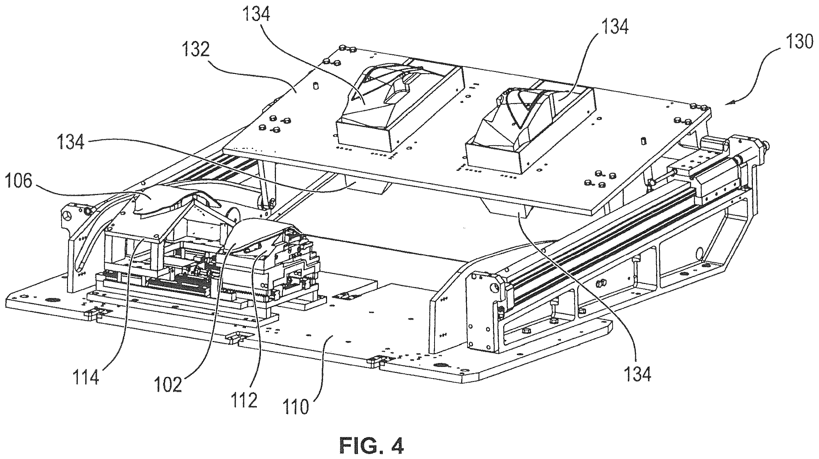

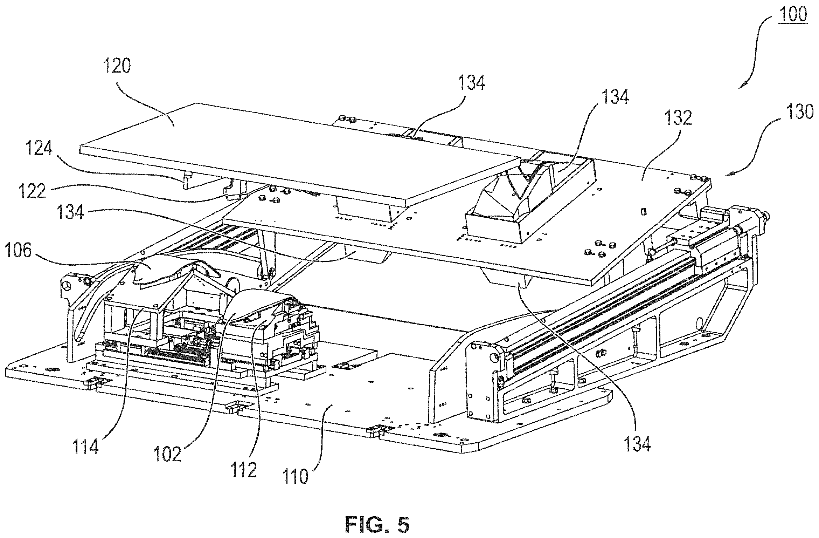

Nun Bezugnehmend auf die Fig. 4 und 5 ist die zweite Ausführungsform einer erfindungsgemäßen Kunststoffschweißvorrichtung 100 dargestellt. Fig. 4 zeigt hierbei den im Vergleich zu Fig. 1 veränderten Hubtisch 110. Der Hubtisch 110 weist, wie der Hubtisch 10 auch, zwei erste Werkzeuge 112 sowie zwei Übergabevorrichtungen 114 auf, von denen jeweils nur eine aus Übersichtlichkeitsgründen dargestellt ist. Die ersten Werkzeuge 112 befinden sich in einer ersten Position während sich die Übergabevorrichtungen 114 in einer Lagerposition befinden.

Auf den ersten Werkzeugen 112 sind ein erstes und ein zweites Bauteil 102 angeordnet. Auf den Übergabevorrichtungen 114 ist ein drittes Bauteil 106 in der Lagerposition angeordnet. Zusätzlich zu dem Hubtisch 10 ist am Hubtisch 110 eine Vorwärmanordnung 130 angeordnet. Die Vorwärmanordnung 130 besteht aus einem Träger 132 mit vier darauf angeordneten Vorwärmvorrichtungen 134, insbesondere Infrarot-Vorwärmvorrichtungen. Die auf einer Oberfläche angeordneten Vorwärmvorrichtungen 134 werden als erste Vorwärmvorrichtung bezeichnet, während die auf der entgegengesetzten Oberfläche des Trägers 132 angeordneten Vorwärmvorrichtungen 134 als zweite Vorwärmvorrichtungen bezeichnet werden. Vorzugsweise sind die Vorwärmvorrichtungen 134 immer paarweise als erste und zweite Vorwärmvorrichtung angeordnet. Nachfolgend werden die erste und die zweite Vorwärmvorrichtung insgesamt als Vorwärmvorrichtung 134 bezeichnet. Die Vorwärmanordnung 130 befindet sich in den Fig. 4 und 5 in einer Ruheposition.

Die vollständige Kunststoffschweißvorrichtung 100 gemäß der zweiten Ausführungsform ist in Fig. 5 dargestellt. Die obere Befestigungsplatte 120 entspricht in ihrem Aufbau der oberen Befestigungsplatte 20 und wurde daher nicht in einer eigenen Figur dargestellt. Analog zum Hubtisch 110 ist auf der oberen Befestigungsplatte 120 jeweils nur die linke Hälfte mit Werkzeugen dargestellt, um die Übersicht deutlicher zu machen und auch das Verständnis für den Verfahrensablauf zu erhöhen. Mittels der in Fig. 5 gezeigten Vorrichtung ist ein reibschweißverfahren, ein Infrarot-Schweißverfahren sowie eine Kombination davon realisierbar.

Nun Bezugnehmend auf die Fig. 6 bis 16 sind die unterschiedlichen Positionen der Kunststoffschweißvorrichtung 100 im Betrieb gezeigt. Zur Vereinfachung wird jeweils alles im Singular beschrieben, auch wenn jeweils zwei ersten, zwei zweite und zwei dritte Werkzeuge und Bauteile sowie zwei Übergabevorrichtungen und zwei erste und zwei zweite Vorwärmvorrichtungen vorhanden sind.

Fig. 6 zeigt die Kunststoffschweißvorrichtung 100 in einer Anfangsposition. Hierbei hat ein Bediener oder eine automatische Beladevorrichtung bereits das erste und das zweite Bauteile 102 auf den ersten Werkzeugen 112 auf dem Hubtisch 110 abgelegt. Weiterhin wurde bereits das dritte Bauteil 106 auf der Übergabevorrichtung 114 in der Lagerposition abgelegt. Der Hubtisch 110 befindet sich in der Anfangsposition und die Vorwärmanordnung in der Ruheposition.

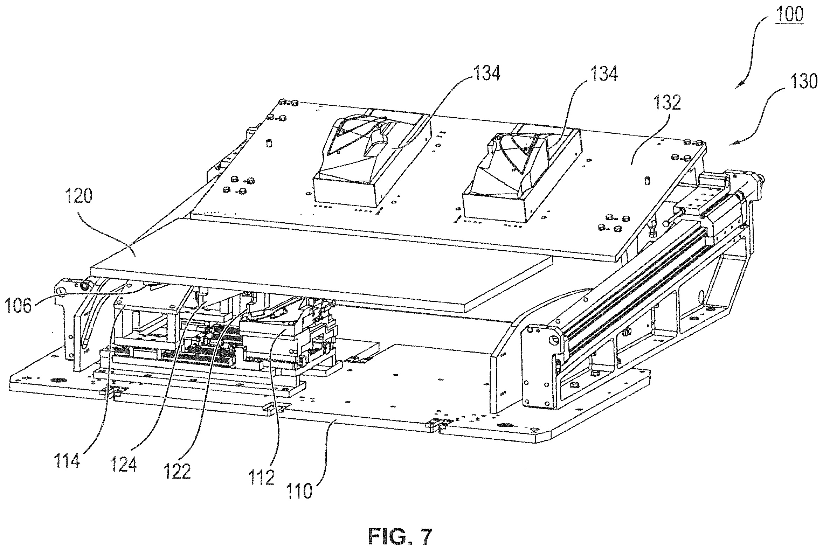

Nun wird der Hubtisch 110 von der Anfangsposition in Richtung der oberen Befestigungsplatte 120 in eine erste Schweißposition verfahren, bis das erste Werkzeug 112 mit dem zweiten Werkzeug 122 in Eingriff steht. Gleichzeitig erfolgt ein Verschweißen des ersten und des zweiten Bauteils mittels Reibschweißen miteinander. Dieser Zustand ist in Fig. 7 dargestellt.

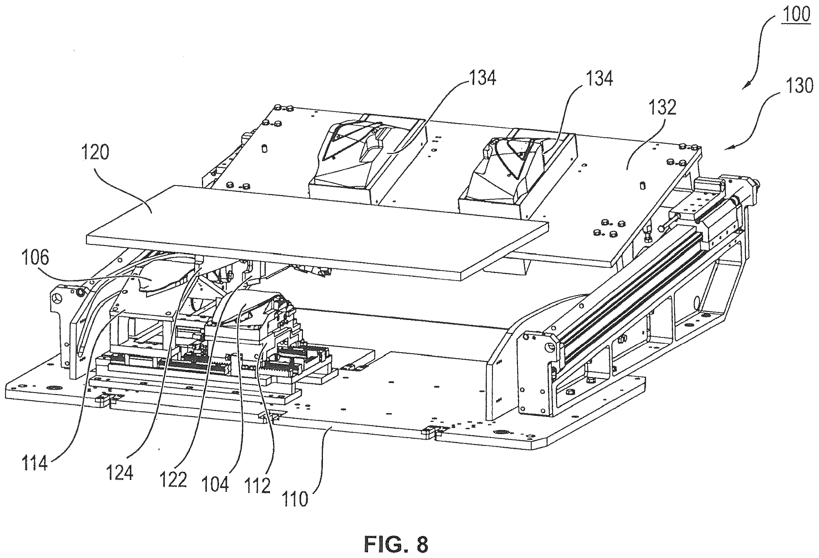

Im Anschluss an das Reibschweißen fährt der Hubtisch 110 von der ersten Schweißposition in eine erste Zwischenposition nach unten. Dies ist in Fig. 8 dargestellt. Sobald das erste Werkzeug 112 mit dem darauf angeordneten Verbund aus erstem und zweitem Bauteil 104 nicht mehr in Eingriff mit dem zweiten Werkzeug 122 steht kann das erste Werkzeug 112 von einer ersten Position in eine zweite Position verfahren werden. Ein Zwischenzustand zwischen der ersten und der zweiten Position des ersten Werkzeugs 112 ist ebenfalls in Fig. 8 gezeigt.

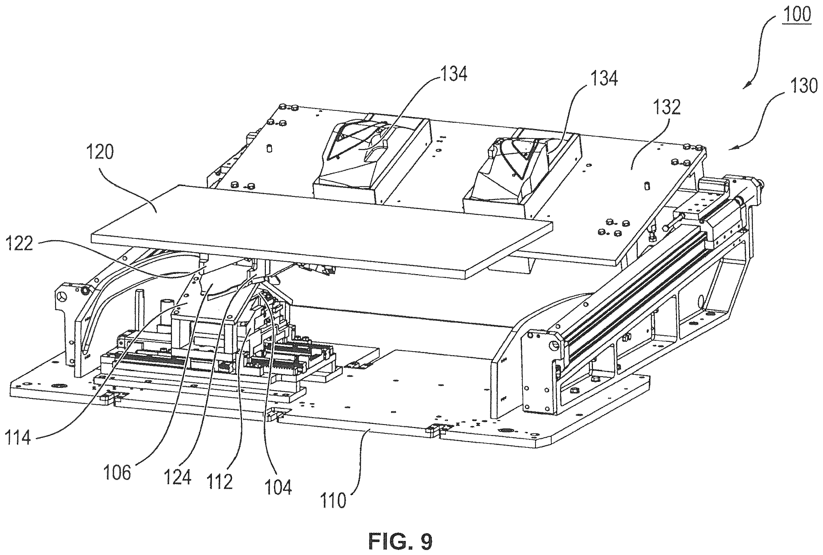

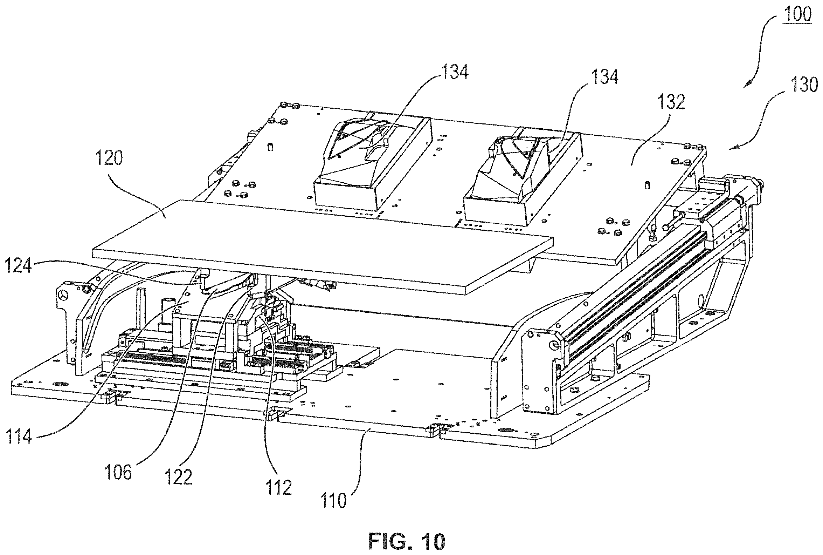

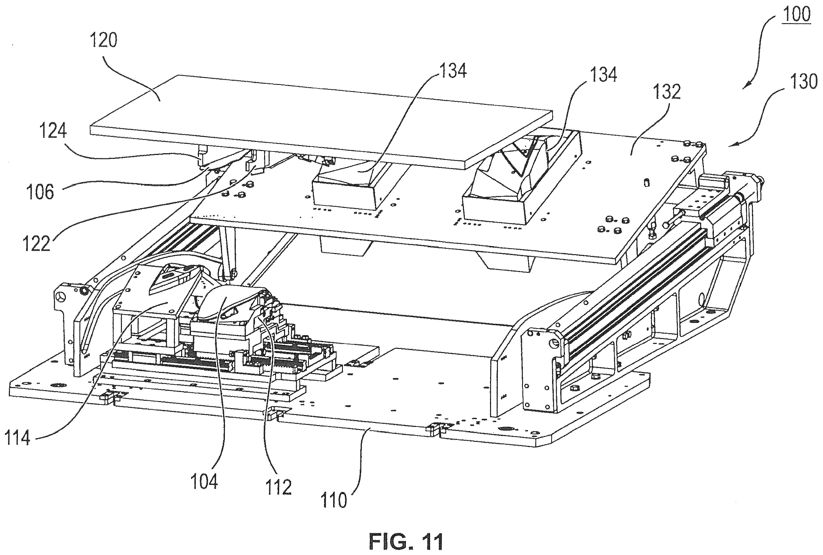

In Fig. 9 wird die Übergabevorrichtung 114 mit dem dritten Bauteil 106 in eine Übergabeposition verfahren. Hierbei ist die Übergabevorrichtung 114 mit dem dritten Werkzeug 124 ausgerichtet. Wie in Fig. 9 dargestellt, und ausreichend Platz innerhalb der Kunststoffschweißvorrichtung vorausgesetzt, sind das erste Werkzeug mit dem Verbund aus erstem und zweitem Bauteil 104 sowie die Übergabevorrichtung 114 mit dem dritten Bauteil 106 und das dritte Werkzeug 124 axial übereinander angeordnet. Nun erfolgt ein Verfahren des Hubtisches 110 in die Übergabeposition des Hubtischs 110 sowie die Übergabe des dritten Bauteils 106 an das dritte Werkzeug 124. Dies ist in Fig. 10 dargestellt. Anschließend wird der Hubtisch 110 in eine Aufnahmeposition gefahren, wie in Fig. 11 dargestellt. In der Aufnahmeposition befindet sich die Übergabevorrichtung 114 wieder in der Lagerposition und das erste Werkzeug 112 ist in der zweiten Position angeordnet.

Alternativ zum oben Beschriebenen wird das erste Werkzeug 112 erst zu einem späteren Zeitpunkt in die zweite Position verfahren, beispielsweise erst nachdem die Übergabevorrichtung 114 nach der Übergabe des dritten Bauteils 106 wieder in die Lagerposition verfahren wurde.

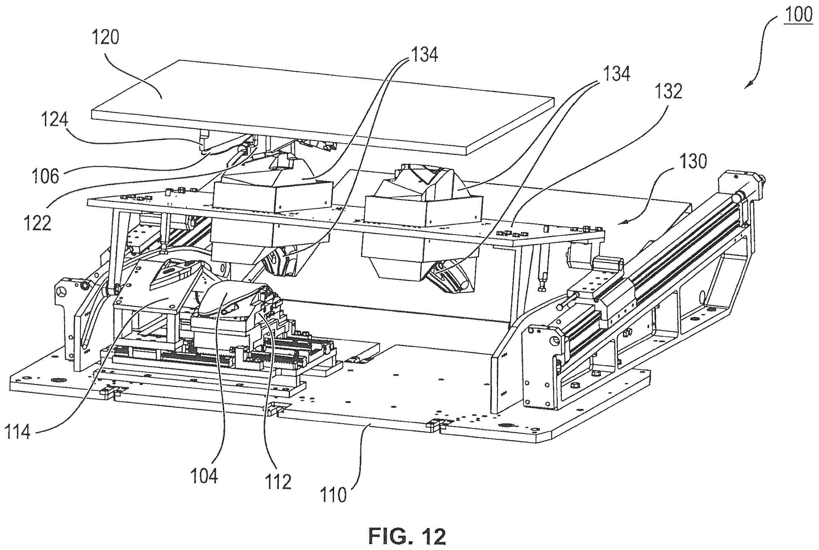

Nachdem oder kurz bevor der Hubtisch 110 die Aufnahmeposition erreicht hat wird die Vorwärmanordnung aus der Ruheposition wegbewegt und hin zu einer Vorwärmposition. Ein Zwischenzustand zwischen der Ruheposition und der Vorwärmposition ist in Fig. 12 gezeigt.

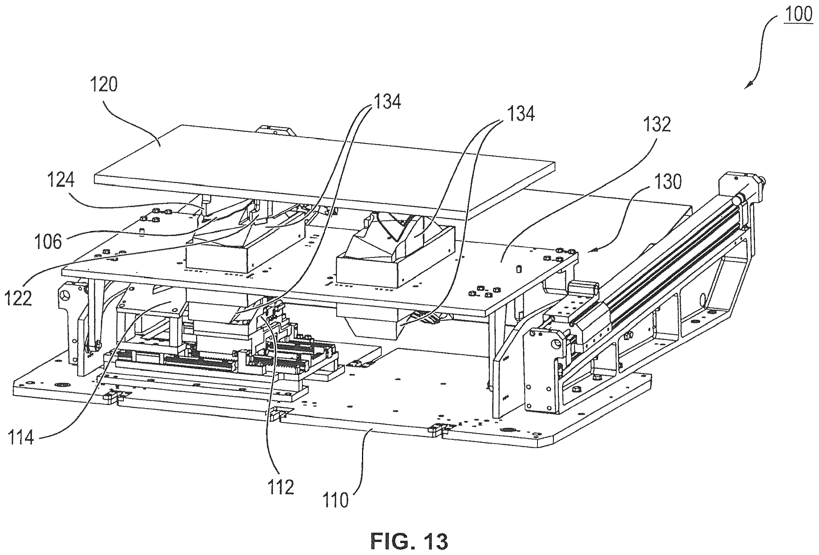

Nachdem die Vorwärmanordnung die Vorwärmposition erreicht hat wird der Hubtisch 110 in eine Vorwärmposition des Hubtischs 110 verfahren. Diese Vorwärmposition des Hubtischs 110 ist in Fig. 13 gezeigt. Eine der Vorwärmvorrichtungen 134, beispielsweise die erste Vorwärmvorrichtung, ist benachbart dem zweiten Bauteil 104 im ersten Werkzeug 112 angeordnet. Die an der gegenüberliegenden Oberfläche des Trägers 132 angeordnete Vorwärmvorrichtung 134, beispielsweise die zweite Vorwärmvorrichtung, ist benachbart dem dritten Bauteil 106 im dritten Werkzeug 124 angeordnet. Mittels der Vorwärmvorrichtungen 134 wird die Oberfläche des zweiten 104 und des dritten Bauteils 106 an den zu verschweißenden Bereichen erwärmt.

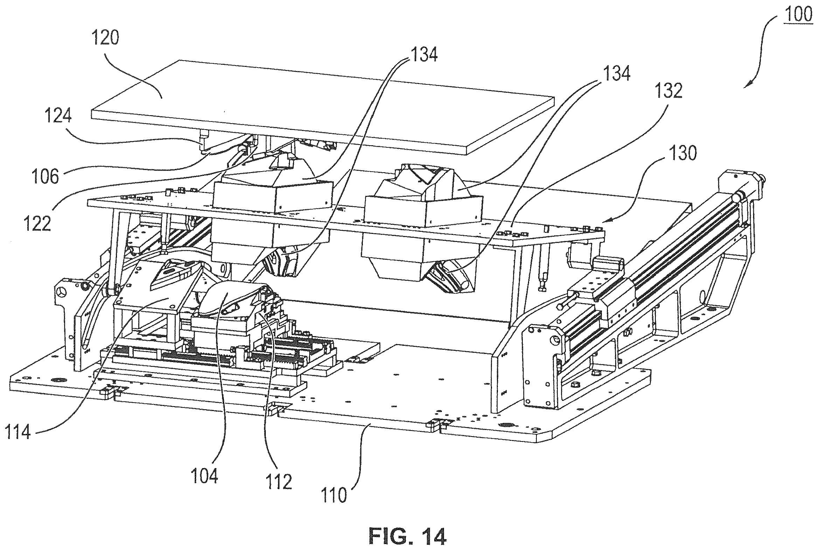

Nach dem Vorwärmen fährt der Hubtisch 110 aus der Vorwärmposition zurück in die Aufnahmeposition. Währenddessen oder nach Erreichen der Aufnahmeposition wird die Vorwärmanordnung 130 von der Vorwärmposition zurück in die Ruheposition verfahren. Ein Zwischenzustand beim Verfahren der Vorwärmanordnung von der Vorwärmposition in die Ruheposition ist in Fig. 14 gezeigt.

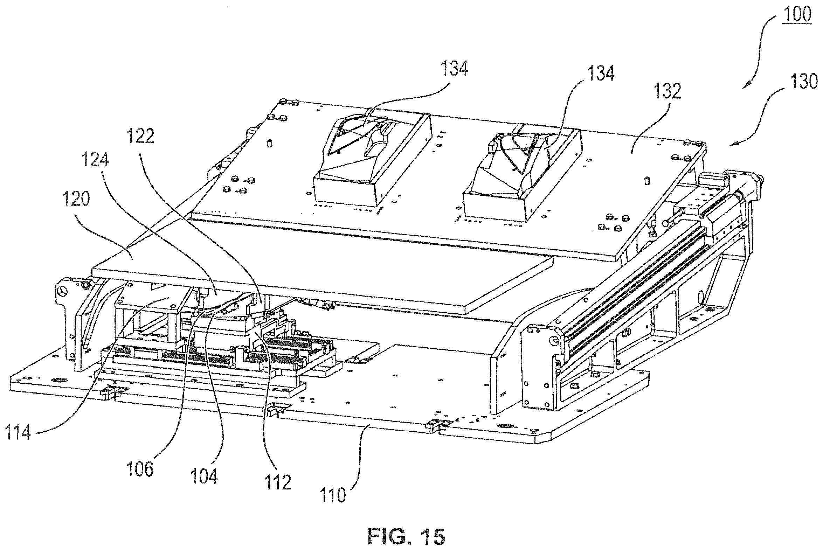

Anschließend wird der Hubtisch 110 von der Aufnahmeposition in eine zweite Schweißposition verfahren. Die zweite Schweißposition ist in Fig. 15 dargestellt. Das Verschweißen in der zweiten Schweißposition erfolgt mittels Reibschweißen. Aufgrund der vorherigen Vorwärmung ist die Fusselbildung reduziert im Vergleich zum reinen Reibschweißen, so dass die Schweißnaht optisch schöner erscheint. Als weiterer Nebeneffekt ergibt sich möglicherweise eine Erhöhung der Schweißnahtfestigkeit. Dies wurde oben bereits beschrieben.

Nach Beendigung des Schweißvorgangs fährt der Hubtisch 110 aus der zweiten Schweißposition weg und beispielsweise zurück in seine Anfangsposition. Der fertige Verbund aus erstem, zweitem und drittem Bauteil ist im ersten Werkzeug 112 oder vorzugsweise im dritten Werkzeug 124 angeordnet. Wenn der fertige Verbund aus den drei Bauteilen im dritten Werkzeug 124 angeordnet ist, dann kann die Kunststoffschweißvorrichtung 100 vor dem Entnehmen des fertigen Verbunds neu Beladen werden, was die Taktzeit im Vergleich zu herkömmlichen Kunststoffschweißvorrichtungen weiter verringert und somit die Effizienz erhöht.

Auch wenn die Vorwärmvorrichtungen 134 starr am Träger 132 angeordnet gezeigt sind, sind in einer alternativen Ausführungsform die Vorwärmvorrichtungen 134 bewegbar am Träger 132 angeordnet. Auf diese Weise sind die Vorwärmvorrichtungen 134 mit dem jeweiligen Werkzeug ausrichtbar. Weiterhin alternativ können zusätzliche Vorwärmvorrichtungen 134 vorgesehen sein. Neben dem oben beschriebenen Vorwärmen ist in beiden beschriebenen Alternativen zusätzlich ein Vorwärmen des ersten und des zweiten Bauteils 102 vor dem Verschweißen des ersten mit dem zweiten Bauteil analog zu den obigen Schritten realisierbar. In beiden beschriebenen Alternativen ist die Vorrichtung dann auch ohne Reibschweißen als reine Infrarot-Schweißvorrichtung betreibbar.

Alternativ sind die Vorwärmvorrichtungen 134 auch nur so angeordnet, dass ein Vorwärmen des ersten und des zweiten Bauteils 102 vor dem Verschweißen realisierbar ist. In diesem Fall handelt es sich, wie in dem ausführlich beschriebenen Betrieb der Kunststoffschweißvorrichtung 100 dargelegt, um eine Kombination aus Infrarot-Schweißen und Reibschweißen.

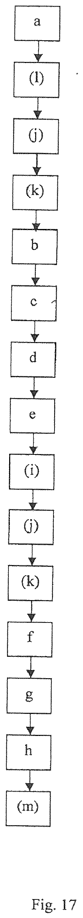

Nachfolgend wird eine Ausführungsform des erfindungsgemäßen automatischen Kunststoffschweißverfahrens für mindestens drei Bauteile unter Bezugnahme auf Fig. 17 beschrieben. Bei dem beschriebenen Kunststoffschweißverfahren handelt es sich um ein Kunststoff-Reibschweißverfahren, ein Kunststoff-Infrarot-Schweißverfahren oder eine Kombination davon.

In einem ersten Schritt a erfolgt ein Anordnen eines ersten Bauteils an einem ersten Werkzeug, eines zweiten Bauteils auf dem ersten Bauteil oder an einem zweiten Werkzeug und eines dritten Bauteils an einer Lagerposition der Kunststoffschweißvorrichtung. Dieses Anordnen kann manuell durch einen Bediener oder automatisch durch einen Roboter, eine Beladevorrichtung oder eine Belade- und Entnahmevorrichtung erfolgen. Wenn das Beladen durch einen Bediener erfolgt, dann erfolgt danach in Schritt 1 ein Bereitstellen eines Eingriffschutzes. Dies ist beispielsweise ein Schließen einer Gehäuseöffnung der Kunststoffschweißvorrichtung oder das Anschalten einer Lichtschranke.

Wenn die Kunststoffschweißvorrichtung eine Vorwärmanordnung mit mindestens einer Vorwärmvorrichtung umfasst und das zweite Bauteil in einem anderen Werkzeug angeordnet ist als das erste Werkzeug, dann kann in Schritt j ein Verfahren der Vorwärmanordnung von einer Ruheposition in eine Vorwärmposition erfolgen, so dass die mindestens eine Vorwärmvorrichtung mit einem der Werkzeuge ausgerichtet ist. In Schritt k findet dann ein zumindest teilweises Erwärmen der Oberfläche eines Bauteils im Werkzeug im zu verschweißenden Bereich statt, vorzugsweise beider Bauteile in beiden Werkzeugen. Nach dem Vorwärmen fährt die Vorwärmanordnung zurück in die Ruheposition.

In Schritt b werden dann das erste Werkzeug und das zweite Werkzeug mit dazwischen angeordnetem erstem und zweitem Bauteil relativ zueinander aus einer Anfangsposition in eine erste Schweißposition verfahren. Vor Erreichen der ersten Schweißposition kann ein Zentrieren des ersten und des zweiten Bauteils zueinander sowie zum jeweiligen Werkzeug erfolgen.

Sobald die erste Schweißposition erreicht ist findet in Schritt c ein Verschweißen des ersten und des zweiten Bauteils miteinander statt. Das Verschweißen erfolgt mittels Reibschweißen mit oder ohne vorherige Vorwärmung statt. Alternativ kann bei vorhandener Vorwärmung ein reines Infrarotschweißen stattfinden. Anschließend werden in Schritt d das erste und das zweite Werkzeug mit dem dazwischen angeordneten Verbund aus verschweißtem erstem und zweitem Bauteil aus der ersten Schweißposition relativ zueinander in eine erste Zwischenposition verfahren.

In der ersten Zwischenposition erfolgt in Schritt e ein automatisches Übergeben des dritten Bauteils von der Lagerposition mittels einer Übergabevorrichtung an eines der Werkzeuge. Wenn die Kunststoffschweißvorrichtung das dritte Werkzeug beispielsweise benachbart dem zweiten Werkzeug aufweist und sich das erste Werkzeug zu Beginn in einer ersten Position in Ausrichtung mit dem zweiten Werkzeug befindet, dann erfolgt in Schritt i ein Verfahren des ersten Werkzeugs in eine zweite Position in Ausrichtung mit dem dritten Werkzeug. Der Schritt i erfolgt nach Schritt c und vor dem nachfolgenden Schritt g.

Wenn die Kunststoffschweißvorrichtung die Vorwärmanordnung mit der mindesten einen Vorwärmvorrichtung umfasst, dann kann analog wie oben in Schritt j ein Verfahren der Vorwärmanordnung von einer Ruheposition in eine Vorwärmposition erfolgen, so dass die mindestens eine Vorwärmvorrichtung mit einem der Werkzeuge ausgerichtet ist. In Schritt k findet dann ein zumindest teilweises Erwärmen der Oberfläche eines Bauteils im Werkzeug im zu verschweißenden Bereich statt, vorzugsweise beider Bauteile in beiden Werkzeugen. Nach dem Vorwärmen fährt die Vorwärmanordnung zurück in die Ruheposition.

Nach der Übergabe des dritten Bauteils an eines der Werkzeuge werden in Schritt f das erste und das zweite Werkzeug oder nur das erste Werkzeug oder nur das zweite Werkzeug jeweils in Kombination mit einem dritten Werkzeug relativ zueinander von der ersten Zwischenposition in eine zweite Schweißposition verfahren. Vor Erreichen der zweiten Schweißposition kann ein Zentrieren des ersten und des zweiten Bauteils zueinander sowie zum jeweiligen Werkzeug erfolgen.

In der zweiten Schweißposition erfolgt in Schritt g ein Verschweißen des dritten Bauteils mit dem Verbund aus verschweißtem erstem und zweitem Bauteil über das erste und das zweite Werkzeug oder über das erste oder das zweite Werkzeug in Kombination mit dem dritten Werkzeug.

Nach dem zweiten Verschweißen werden in Schritt h das erste und das zweite Werkzeug oder das erste oder das zweite Werkzeug in Kombination mit dem dritten Werkzeug relativ zueinander aus der zweiten Schweißposition verfahren. Beispielsweise fahren das erste und das zweite Werkzeug relativ zueinander zurück in die Anfangsposition. Ein Entnehmen des fertigen Verbunds aus erstem, zweitem und drittem Bauteil erfolgt manuell durch den Bediener oder automatisch durch einen Roboter, eine Entnahmevorrichtung oder eine Belade- und Entnahmevorrichtung. Wenn der fertige Verbund von einem Bediener entnommen wird, dann erfolgt vor dem Entnehmen und nach Erreichen der Anfangsposition in Schritt m ein Entfernen des Eingriffschutzes, also beispielsweise ein Öffnen der Gehäuseöffnung der Kunststoffschweißvorrichtung oder ein Abschalten der Lichtschranke.

### Bezugszeichenliste

1 Kunststoffschweißvorrichtung
10 Hubtisch
12 erstes Werkzeug
14 Übergabevorrichtung
20 obere Befestigungsplatte
22 zweites Werkzeug
24 drittes Werkzeug
100 Kunststoffschweißvorrichtung
102 zweites Bauteil
104 Verbund aus erstem und zweitem Bauteil (verschweißt)
106 drittes Bauteil
108 Verbund aus erstem, zweitem und drittem Bauteil (verschweißt)
110 Hubtisch
112 erstes Werkzeug
114 Übergabevorrichtung
120 obere Befestigungsplatte
122 zweites Werkzeug
124 drittes Werkzeug
130 Vorwärmanordnung
132 Träger
134 Vorwärmvorrichtung

## Patentansprüche

1. Kunststoffschweißvorrichtung (1; 100) zum automatischen Verschweißen von mindestens drei Bauteilen, die umfasst:
a. mindestens ein erstes Werkzeug (12; 112), auf dem ein erstes Bauteil positionierbar ist,
b. mindestens ein zweites Werkzeug (22; 122), wobei das erste (12; 112) und das zweite Werkzeug (22; 122) relativ zueinander bewegbar sind, um das erste Bauteil mit einem zweiten Bauteil (102) zu verschweißen, sowie
c. mindestens eine Übergabevorrichtung (14; 114), die relativ zu mindestens einem der Werkzeuge (12, 22; 112, 122) bewegbar ist und mit der automatisch mindestens ein zweites (102) und/oder ein drittes Bauteil (106) einem der Werkzeuge (12, 22; 112, 122) zuführbar ist, so dass das mindestens eine dritte Bauteil (106) mit dem Verbund (104) aus erstem und zweitem Bauteil über das erste (12; 112) und das zweite Werkzeug (22; 122) oder über das erste (12; 112) oder das zweite Werkzeug (22; 122) in Kombination mit einem dritten Werkzeug (24; 124) verschweißbar ist, **dadurch gekennzeichnet dass**
d. die Kunststoffschweißvorrichtung eine Vorwärmanordnung (130) mit einer ersten Vorwärmvorrichtung (134) umfasst, wobei die Vorwärmanordnung (130) zwischen einer Ruheposition und einer Vorwärmposition bewegbar ist, so dass die Oberfläche mindestens eines der miteinander zu verbindenden Bauteile (102, 104, 106) im zu verschweißenden Bereich in der Vorwärmposition der Vorwärmanordnung (130) zumindest teilweise erwärmbar ist.

2. Kunststoffschweißvorrichtung (1; 100) gemäß Patentanspruch 1, wobei die Kunststoffschweißvorrichtung (1; 100) eine Kunststoff-Reibschweißvorrichtung (1), eine Kunststoff-Infrarot-Schweißvorrichtung oder eine Kombination (100) davon ist.

3. Kunststoffschweißvorrichtung (1; 100) gemäß einem der vorhergehenden Patentansprüche, wobei das erste Werkzeug (12; 112) auf einem ersten Träger angeordnet ist und das zweite Werkzeug (22; 122) auf einem zweiten Träger angeordnet ist, wobei der erste und der zweite Träger relativ zueinander bewegbar sind.

4. Kunststoffschweißvorrichtung (1; 100) gemäß Patentanspruch 3, wobei der erste Träger ein Hubtisch (10; 110) der Kunststoffschweißvorrichtung (1; 100) ist und der zweite Träger ist eine obere Befestigungsplatte (20; 120) der Kunststoffschweißvorrichtung (1; 100).

5. Kunststoffschweißvorrichtung (1; 100) gemäß einem der Patentansprüche 3 oder 4 , wobei das dritte Werkzeug (24; 124) am zweiten Träger angeordnet ist.

6. Kunststoffschweißvorrichtung (1; 100) gemäß Patentanspruch 5, wobei das erste Werkzeug (12; 112) bewegbar ist zwischen einer ersten Position, in der das erste Werkzeug (12; 112) mit dem zweiten Werkzeug (22; 122) ausgerichtet ist, und einer zweiten Position, in der das erste Werkzeug (12; 112) mit dem dritten Werkzeug (24; 124) ausgerichtet ist.

7. Kunststoffschweißvorrichtung (1; 100) gemäß einem der Patentansprüche 3 bis 6, wobei die Übergabevorrichtung (14; 114) am ersten Träger angeordnet ist und zwischen einer Lagerposition und einer Übergabeposition bewegbar ist.

8. Kunststoffschweißvorrichtung (100) gemäß einem der vorhergehenden Patentansprüche, wobei die Vorwärmanordnung (130) weiterhin eine zweite Vorwärmvorrichtung (134) umfasst, die auf einer der ersten Vorwärmvorrichtung (134) gegenüberliegenden Oberfläche eines Trägers (132) der Vorwärmanordnung (130) angeordnet ist, so dass das erste sowie das zweite Bauteil (102) und/oder das zweite (104) und das dritte Bauteil (106) in den miteinander zu verschweißenden Bereichen in der Vorwärmposition der Vorwärmanordnung (130) zumindest teilweise erwärmbar sind.

9. Kunststoffschweißvorrichtung (100) gemäß einem der vorhergehenden Patentansprüche, wobei die Vorwärmanordnung (130) am ersten Träger angeordnet ist.

10. Kunststoffschweißvorrichtung (100) gemäß einem der vorhergehenden Patentansprüche, wobei die erste und/oder die zweite Vorwärmvorrichtung (134) eine Infrarot-Vorwärmvorrichtungist.

11. Kunststoffschweißvorrichtung (1; 100) gemäß einem der vorhergehenden Patentansprüche, die mindestens zwei erste (12; 112) und mindestens zwei zweite Werkzeuge (22; 122) aufweist.

12. Kunststoffschweißvorrichtung (1; 100) gemäß einem der vorhergehenden Patentansprüche, die eine Steuervorrichtung aufweist.

13. Kunststoffschweißvorrichtung (1; 100) gemäß einem der vorhergehenden Patentansprüche, die ein Gehäuse mit einem Eingriffschutz, insbesondere einer schließbaren Gehäuseöffnung oder einer Lichtschranke, aufweist.

14. Automatisches Kunststoffschweißverfahren für mindestens drei Bauteile in Verbindung mit einer Schweißvorrichtung (1; 100), insbesondere gemäß einem der Patentansprüche 1 bis 13, umfassend die Schritte:
a. Anordnen (a) eines ersten Bauteils an einem ersten Werkzeug (12; 112), eines zweiten Bauteils (102) auf dem ersten Bauteil oder an einem zweiten Werkzeug (22; 122) und eines dritten Bauteils (106) an einer Lagerposition der Kunststoffschweißvorrichtung (1; 100), danach
b. Verfahren (b) des ersten Werkzeugs (12; 112) und des zweiten Werkzeugs (22; 122) relativ zueinander mit dazwischen angeordnetem erstem und zweitem Bauteil (102) aus einer Anfangsposition in eine erste Schweißposition, und
c. Verschweißen (c) des ersten und des zweiten Bauteils (102) miteinander, anschließend
d. Verfahren (d) des ersten (12; 112) und des zweiten Werkzeugs (22; 122) relativ zueinander mit dem dazwischen angeordneten Verbund (104) aus verschweißtem erstem und zweitem Bauteil aus der ersten Schweißposition in eine erste Zwischenposition,
e. automatisches Übergeben (e) des dritten Bauteils (106) von der Lagerposition mittels einer Übergabevorrichtung (14; 114) an eines der Werkzeuge,
f. Verfahren (f) des ersten (12; 112) und des zweiten Werkzeugs (22; 122) oder des ersten (12; 112) oder des zweiten Werkzeugs (22; 122) in Kombination mit einem dritten Werkzeug (24; 124) relativ zueinander von der Übergabeposition in eine zweite Schweißposition, danach
g. Verschweißen (g) des dritten Bauteils (106) mit dem Verbund (104) aus verschweißtem erstem und zweitem Bauteil über das erste (12; 112) und das zweite Werkzeug (22; 122) oder über das erste (12; 112) oder das zweite Werkzeug (22; 122) in Kombination mit dem dritten Werkzeug (24; 124) und
h. Verfahren (h) des ersten (12; 112) und des zweiten Werkzeugs (22; 122) oder des ersten (12; 112) oder des zweiten Werkzeugs (22; 122) in Kombination mit dem dritten Werkzeug (24; 124) aus der zweiten Schweißposition, wobei
die Kunststoffschweißvorrichtung (100) weiterhin eine Vorwärmanordnung (130) mit mindestens einer Vorwärmvorrichtung (134) umfasst und das Schweißverfahren ist **gekennzeichnet durch**
i. Verfahren (j) der Vorwärmanordnung (130) von einer Ruheposition in eine Vorwärmposition, so dass die mindestens eine Vorwärmvorrichtung (134) mit einem der Werkzeuge ausgerichtet ist, und
j. zumindest teilweises Erwärmen (k) der Oberfläche eines Bauteils im Werkzeug im zu verschweißenden Bereich.

15. Automatisches Kunststoffschweißverfahren gemäß Patentanspruch 14, wobei das Schweißverfahren ein Kunststoff-Reibschweißverfahren, ein Kunststoff-Infrarot-Schweißverfahren oder eine Kombination davon ist.

16. Automatisches Kunststoffschweißverfahren gemäß einem der Patentansprüche 14 oder 15, wobei die Kunststoffschweißvorrichtung (1; 100) das dritte Werkzeug (24; 124) benachbart dem zweiten Werkzeug (22; 122) aufweist und sich das erste Werkzeug (12; 112) zu Beginn in einer ersten Position in Ausrichtung mit dem zweiten Werkzeug (22; 122) befindet, wobei das Schweißverfahren den weiteren Schritt umfasst:
k. Verfahren (i) des ersten Werkzeugs (12; 112) in eine zweite Position in Ausrichtung mit dem dritten Werkzeug (24; 124) während oder nach Schritt d und vor Schritt g.

17. Automatisches Kunststoffschweißverfahren gemäß einem der Patentansprüche 14 bis 16, das die weiteren Schritte aufweist:
1. Bereitstellen (1) eines Eingriffschutzes, insbesondere Schließen einer Gehäuseöffnung oder Anschalten einer Lichtschranke der Kunststoffschweißvorrichtung (1; 100), nach Schritt a und
m. Entfernen (m) des Eingriffschutzes, insbesondere Öffnen der Gehäuseöffnung oder Ausschalten der Lichtschranke der Kunststoffschweißvorrichtung (1; 100), frühestens nach Schritt h.

## Claims

1. A plastic welding device (1; 100) for the automatic welding of at least three components, which comprises:
a. at least a first tool (12; 112), on which a first component is positionable,
b. at least a second tool (22; 122), wherein the first (12; 112) and the second tool (22; 122) are movable relative to each other in order to weld the first component with a second component (102) as well as
c. at least a transfer device (14; 114), which is movable relative to at least one of the tools (12, 22; 112, 122) and with which at least a second (102) and/or a third component (106) is automatically feedable to one of the tools (12, 22; 112, 122) so that the at least one third component (106) is weldable with the compound (104) made up of the first and second components via the first (12; 112) and second tool (22; 122) or via the first (12; 112) and the second tool (22; 122) in combination with a third tool (24; 124), **characterized in that**
d. the plastic welding device comprises a preheating arrangement (130) with a first preheating device (134), wherein the preheating arrangement (130) is movable between a rest position and a preheating position so that the surface of at least one of the components (102, 104, 106) to be interconnected is at least partially heatable in the area to be welded in the preheating position of the preheating arrangement (130).

2. The plastic welding device (1; 100) according to patent claim 1, wherein the plastic welding device (1; 100) is a plastic friction welding device (1), a plastic infrared welding device or a combination (100) thereof.

3. The plastic welding device (1; 100) according to one of the previous patent claims, wherein the first tool (12; 112) is arranged on a first support and the second tool (22; 122) is arranged on a second support, wherein the first and the second support are movable relative to each other.

4. The plastic welding device (1; 100) according to patent claim 3, wherein the first support is a lifting table (10; 110) of the plastic welding device (1; 100) and the second support is an upper fastening plate (20; 120) of the plastic welding device (1; 100).

5. The plastic welding device (1; 100) according to one of patent claims 3 or 4,
wherein the third tool (24; 124) is arranged on the second support.

6. The plastic welding device (1; 100) according to patent claim 5, wherein the first tool (12; 112) is movable between a first position, in which the first tool (12; 112) is aligned with the second tool (22; 122), and a second position, in which the first tool (12; 112) is aligned with the third tool (24; 124).

7. The plastic welding device (1; 100) according to one of patent claims 3 to 6,
wherein the transfer device (14; 114) is arranged on the first support and is movable between a storage position and a transfer position.

8. The plastic welding device (100) according to one of the previous patent claims, wherein the preheating arrangement (130) further comprises a second preheating device (134), which is arranged on a surface of a support (132) of the preheating arrangement (130) lying opposite the first preheating device (134) so that the first as well as the second component (102) and/or the second (104) and the third component (106) are at least partially heatable in the areas to be welded with each other in the preheating position of the preheating arrangement (130).

9. The plastic welding device (100) according to one of the previous patent claims, wherein the preheating arrangement (130) is arranged on the second support.

10. The plastic welding device (100) according to one of the previous patent claims, wherein the first and/or the second preheating device (134) is an infrared preheating device.

11. The plastic welding device (1; 100) according to one of the previous patent claims, which has at least two first (12; 112) and at least two second tools (22; 122).

12. The plastic welding device (1; 100) according to one of the previous patent claims, which has a control device.

13. The plastic welding device (1; 100) according to one of the previous patent claims, which has a housing with a contact protection, in particular a closable housing opening or a light barrier.

14. An automatic plastic welding method for at least three components in connection with a welding device (1; 100), in particular according to one of the patent claims 1 to 13, comprising the steps:
a. arranging (a) a first component on a first tool (12; 112), a second component (102) on the first component or on a second tool (22; 122) and a third component (106) at a storage position of the plastic welding device (1; 100), thereafter
b. moving (b) the first tool (12; 112) and the second tool (22; 122) relative to each other with the first and second components (102) arranged in between from a starting position into a first welding position, and
c. welding (c) the first and the second component (102) with each other, subsequently
d. moving (d) the first (12; 112) and the second tool (22; 122) relative to each other with the compound (104) made up of the welded first and second components arranged in between from the first welding position into a first intermediate position,
e. automatically transferring (e) the third component (106) from the storage position by means of a transfer device (14; 114) to one of the tools,
f. transferring (f) the first (12; 112) and the second tool (22; 122) or of the first (12; 112) or of the second tool (22; 122) in combination with a third tool (24; 124) relative to each other from the transfer position into a second welding position, thereafter
g. welding (g) of the third component (106) with the compound (104) made up of the welded first and second components via the first (12; 112) and the second tool (22; 122) or via the first (12; 112) or the second tool (22; 122) in combination with the third tool (24; 124) and
h. moving (h) of the first (12; 112) and of the second tool (22; 122) or of the first (12; 112) or of the second tool (22; 122) in combination with the third tool (24; 124) from the second welding position, wherein
the plastic welding device (100) further comprises a preheating arrangement (130) with at least one preheating device (134) and the welding method is **characterized by**:
i. moving (j) of the preheating arrangement (130) from a rest position into a preheating position so that the at least one preheating device (134) is aligned with one of the tools and
j. at least partial heating (k) of the surface of a component in the tool in the area to be welded.

15. The automatic plastic welding method according to patent claim 14, wherein the welding method is a plastic friction welding method, a plastic infrared welding method or a combination thereof.

16. The automatic plastic welding method according to one of patent claims 14 or 15, wherein the plastic welding device (1; 100) has the third tool (24; 124) adjacent to the second tool (22; 122) and the first tool (12; 112) is initially located in a first position in alignment with the second tool (22; 122), wherein the welding method comprises the further step:
k. moving (i) of the first tool (12; 112) into a second position in alignment with the third tool (24; 124) during or after step d and before step g.

17. The automatic plastic welding method according to one of patent claims 14 to 16, which has the further steps:
1. providing (1) of a contact protection, in particular closing of a housing opening or switching on of a light barrier of the plastic welding device (1; 100), after step a and
m. removing (m) of the contact protection, in particular opening of the housing opening or switching off of the light barrier of the plastic welding device (1; 100), at the earliest after step h.

## Revendications

1. Dispositif de soudage de matière synthétique (1 ; 100) servant au soudage automatique d'au moins trois composants, qui comprend :
a. au moins un premier outil (12 ; 112), sur lequel un premier composant peut être positionné,
b. au moins un deuxième outil (22 ; 122), dans lequel le premier (12 ; 112) et le deuxième outil (22 ; 122) peuvent être déplacés l'un par rapport à l'autre pour souder le premier composant à un deuxième composant (102), ainsi
c. qu'au moins un dispositif de transfert (14 ; 114), qui peut être déplacé par rapport à au moins l'un des outils (12, 22 ; 112,122) et avec lequel au moins un deuxième (102) et/ou un troisième composant (106) peut être amené à l'un des outils (12, 22 ; 112, 122), si bien que ledit troisième composant (106) au moins peut être soudé à l'assemblage (104) constitué du premier et du deuxième composant au moyen du premier (12 ; 112) et du deuxième outil (22 ; 122) ou bien au moyen du premier (12 ; 112) ou du deuxième outil (22 ; 122) en combinaison avec un troisième outil (24 ; 124), **caractérisé en ce que**
d. le dispositif de soudage de matière synthétique comprend un groupe de préchauffage (130) avec un premier dispositif de préchauffage (134), dans lequel le groupe de préchauffage (130) peut être déplacé entre une position de repos et une position de préchauffage, si bien que la surface d'au moins un des composants (102, 104, 106) à relier entre eux est chauffable au moins en partie dans la zone à souder en position de préchauffage du groupe de préchauffage (130).

2. Dispositif de soudage de matière synthétique (1 ; 100) selon la revendication 1, dans lequel le dispositif de soudage de matière synthétique (1 ; 100) est un dispositif de soudage par friction de matière synthétique (1), un dispositif de soudage par infrarouge de matière synthétique ou une combinaison (100) des deux.

3. Dispositif de soudage de matière synthétique (1 ; 100) selon l'une des revendications précédentes, dans lequel le premier outil (12 ; 112) est disposé sur un premier support et le deuxième outil (22 ; 122) est disposé sur un second support, dans lequel le premier support et le second support peuvent être déplacés l'un par rapport à l'autre.

4. Dispositif de soudage de matière synthétique (1 ; 100) selon la revendication 3, dans lequel le premier support est une table élévatrice (10 ; 110) du dispositif de soudage de matière synthétique (1 ; 100) et le second support est une plaque de fixation supérieure (20 ; 120) du dispositif de soudage de matière synthétique (1 ; 100).

5. Dispositif de soudage de matière synthétique (1 ; 100) selon l'une des revendications 3 ou 4, dans lequel le troisième outil (24 ; 124) est disposé sur le second support.

6. Dispositif de soudage de matière synthétique (1 ; 100) selon la revendication 5, dans lequel le premier outil (12 ; 112) peut être déplacé entre une première position, dans laquelle le premier outil (12 ; 112) est aligné à l'aide du deuxième outil (22 ; 122), et une seconde position, dans laquelle le premier outil (12 ; 112) est aligné à l'aide du troisième outil (24 ; 124).

7. Dispositif de soudage de matière synthétique (1 ; 100) selon l'une des revendications 3 à 6, dans lequel le dispositif de transfert (14 ; 114) est disposé sur le premier support et peut être déplacé entre une position de rangement et une position de transfert.

8. Dispositif de soudage de matière synthétique (1 ; 100) selon l'une des revendications précédentes, dans lequel le groupe de préchauffage (130) comprend encore un second dispositif de préchauffage (134), qui est disposé sur une surface en face du premier dispositif de préchauffage (134) sur un support (132) du groupe de préchauffage (130), si bien que le premier ainsi que le deuxième composant (102) et/ou le deuxième (104) et le troisième composant (106) sont chauffables au moins en partie dans les zones à souder entre elles en position de préchauffage du groupe de préchauffage (130).

9. Dispositif de soudage de matière synthétique (100) selon l'une des revendications précédentes, dans lequel le groupe de préchauffage (130) est disposé sur le premier support.

10. Dispositif de soudage de matière synthétique (100) selon l'une des revendications précédentes, dans lequel le premier et/ou le second dispositif de préchauffage (134) est un dispositif de préchauffage par infrarouge.

11. Dispositif de soudage de matière synthétique (1 ; 100) selon l'une des revendications précédentes, qui présente au moins deux premiers (12 ; 112) et au moins deux deuxièmes outils (22 ; 122).

12. Dispositif de soudage de matière synthétique (1 ; 100) selon l'une des revendications précédentes, qui présente un dispositif de commande.

13. Dispositif de soudage de matière synthétique (1 ; 100) selon l'une des revendications précédentes, qui présente un boîtier équipé d'une protection anti-manipulation, notamment d'une ouverture de boîtier verrouillable ou d'un barrage photoélectrique.

14. Procédé de soudage de matière synthétique automatique d'au moins trois composants, associé à un dispositif de soudage de matière synthétique (1 ; 100), en particulier selon l'une des revendications 1 à 13, comprenant les étapes :
a. disposition (a) d'un premier composant sur un premier outil (12 ; 112), d'un deuxième composant (102) sur le premier composant ou sur un deuxième outil (22 ; 122) et d'un troisième composant (106) dans une position de rangement du dispositif de soudage de matière synthétique (1 ; 100), ensuite
b. déplacement (b) du premier outil (12 ; 112) et du deuxième outil (22 ; 122) l'un par rapport à l'autre avec le premier et le deuxième composant (102) disposés entre depuis une position initiale jusque dans une première position de soudage, et
c. soudage (c) du premier et du deuxième composant (102) l'un à l'autre, puis
d. déplacement (d) du premier (12 ; 112) et du deuxième outil (22 ; 122) l'un par rapport à l'autre avec l'assemblage (104) disposé entre, constitué du premier composant et du deuxième composant soudés depuis la première position de soudage jusque dans une première position intermédiaire,
e. transfert (e) automatique du troisième composant (106) à l'un des outils de la position de rangement au moyen d'un dispositif de transfert (14 ; 114),
f. déplacement (f) du premier (12 ; 112) et du deuxième outil (22 ; 122) ou bien du premier (12 ; 112) ou du deuxième outil (22 ; 122) en combinaison avec un troisième outil (24 ; 124) l'un par rapport à l'autre depuis la position de transfert jusque dans une seconde position de soudage, ensuite
g. soudage (g) du troisième composant (106) à l'assemblage (104) constitué du premier et du deuxième composant au moyen du premier (12 ; 112) et du deuxième outil (22 ; 122) ou bien au moyen du premier (12 ; 112) ou du deuxième outil (22 ; 122) en combinaison avec le troisième outil (24 ; 124) et
h. déplacement (h) du premier (12 ; 112) et du deuxième outil (22 ; 122) ou bien du premier (12 ; 112) ou du deuxième outil (22 ; 122) en combinaison avec le troisième outil (24 ; 124) depuis la seconde position de soudage, dans lequel
le dispositif de soudage de matière synthétique (100) comprend encore un groupe de préchauffage (130) avec au moins un dispositif de préchauffage (134) et le procédé de soudage est **caractérisé par**
i. le déplacement (j) du groupe de préchauffage (130) depuis une position de repos dans une position de préchauffage, si bien que le dispositif de préchauffage (134) au moins est aligné avec l'un des outils, et
j. le réchauffement (k) au moins partiel de la surface d'un composant sur l'outil dans la zone à souder.

15. Procédé de soudage de matière synthétique automatique selon la revendication 14, dans lequel le procédé de soudage est un procédé de soudage par friction de matière synthétique, un procédé de soudage par infrarouge de matière synthétique ou une combinaison des deux.

16. Procédé de soudage de matière synthétique automatique selon l'une des revendications 14 ou 15, dans lequel le dispositif de soudage de matière synthétique (1 ; 100) présente le troisième outil (24 ; 124) adjacent au deuxième outil (22 ; 122) et le premier outil (12 ; 112) se trouve au début dans une première position en alignement avec le deuxième outil (22 ; 122), dans lequel le procédé de soudage comprend l'autre étape :
k. déplacement (i) du premier outil (12 ; 112) dans une seconde position en alignement avec le troisième outil (24 ; 124) durant ou après l'étape d et avant l'étape g.

17. Procédé de soudage de matière synthétique automatique selon l'une des revendications 14 à 16, qui présente les autres étapes :
1. mise en place (1) d'une protection anti-manipulation, notamment verrouillage d'une ouverture de boîtier ou activation d'un barrage photoélectrique du dispositif de soudage de matière synthétique (1 ; 100), après l'étape a et
m. enlèvement (m) de la protection anti-manipulation, notamment déverrouillage de l'ouverture de boîtier ou désactivation du barrage photoélectrique du dispositif de soudage de matière synthétique (1 ; 100), au plus tôt après l'étape h.
